Europäisches Patentamt

European Patent Office

Office européen des brevets

(11) Publication number: **0 267 735**
**A2**

(12) **EUROPEAN PATENT APPLICATION**

(21) Application number: 87309783.6

(51) Int. Cl.4: **A23L 1/29**

(22) Date of filing: 05.11.87

(30) Priority: 14.11.86 US 931393

(43) Date of publication of application:
18.05.88 Bulletin 88/20

(84) Designated Contracting States:
AT BE CH DE ES FR GB GR IT LI LU NL SE

(71) Applicant: NUTRI/SYSTEM, INC.
3901 Commerce Avenue
Willow Grove Pennsylvania 19090(US)

(72) Inventor: Satz, Jay E., Ph.D
836 Timber Lane
Dresher, PA 19025(US)
Inventor: Schiffman, Susan S., Ph.D
18 Heath Place
Durham North Carolina 27705(US)

(74) Representative: Bassett, Richard Simon et al
ERIC POTTER & CLARKSON 14 Oxford Street
Nottingham NG1 5BP(GB)

(54) **Composition, apparatus and method of dieting.**

(57) Novel compositions, articles, and methods are disclosed which are useful in dieting programs to achieve flavor set point satiety. The low-calorie fluid compositions include effective amounts of a flavor agent and a sweetener and are sprayable fluids adapted for oral administration to the dieter. The compositions include shelf-stable compositions having a high solids content. Also disclosed are food substances whose flavor is augmented by addition of substantially non-caloric flavor agents. Such fluid compositions and food substances are useful in the novel methods of dieting, wherein the dieter consumes during a given time interval food having a number of calories effective to produce weight loss, and consumes during that interval an amount of low-calorie flavor agent effective to achieve flavor set point satiety.

FIG. 1

# COMPOSITION, APPARATUS, AND METHOD FOR DIETING

## BACKGROUND OF THE INVENTION

This invention relates to dieting and weight control. More particularly, this invention relates to flavored compositions and/or food additives and their use, and methods and apparatus for administering them. The innovations of the present invention are useful in permitting a dieting person to obtain his customary daily intake of flavor without the necessity of consuming caloric food.

Many factors have been proposed to explain why the majority of weight loss attempts by the chronically overweight end in failure. Physiologists suggest excessive numbers of fat cells or abnormal regulatory mechanisms for amino acids, lipids, or glucose. Psychologists have stressed excessive oral needs due to unresolved dependency problems. Behaviorists have focused on improper eating habits and lack of exercise. Some theorists, including nutritionists, have concentrated on calorie intake, predominantly in the form of fats and carbohydrates, while others assume that each individual has a "set point" or setting inside the brain which regulates body weight and, for example, defends such setting by regulating metabolic rate to defeat any attempted weight loss through the lowering of caloric intake. The suggested solution to the "set point" problem is balanced eating and moderate exercise.

Although all of these factors can play a role in obesity, applicant has discovered that the main characteristic which distinguishes overweight persons from their leaner counterparts is simply that the former wants more intense and varied taste and odor from their food.

It is known that a person must derive oral sensation from food in order to feel satisfied with what has been eaten. A classic clinical report describes the case of a man whose esophagus was destroyed in childhood and was consequently fed through a tube inserted directly into his stomach. This man found that to experience satiety, it was necessary for him to chew his food first to get taste and smell sensations before the food was inserted into his stomach. Thus, he required taste and smell sensations to feel full even if the food inserted into his stomach was nutritionally adequate. Other studies in which the ventromedial hypothalamus of the brain is lesioned suggest that this brain center mediates hedonic satiety. That is, the ventromedial hypothalamus provides information on satiety based on the palatability of the food substances that have been eaten.

Applicant has discovered that each person, whether thin or overweight, has a certain flavor set point, that is, a certain amount of intensity and variety of taste and odor which one desires from one's food. Applicant has further discovered that overweight persons frequently have higher flavor set points than do thin persons.

It is observed that people, including overweight people, may have flavor set points which are elevated ether specifically or generally, or both. A person with an elevated specific flavor set point requires a daily intake of a particular flavor or flavors in order to achieve satiety. A person with an elevated general flavor set point requires an elevated amount of flavor in his daily diet, but need not necessarily obtain the requisite amount of flavor from particular foods, and may obtain it from a variety of different foods.

Such an exaggerated set point may occur in overweight children, or in overweight adults who do not have a history of dieting. As early as four or five years of age, overweight children often require more flavor to feel satisfied than do thin children. The reason for such an exaggerated set point may be heredity or early overfeeding, or perhaps both.

In any event, overweight persons tend to use food to deal with uncomfortable states, such as boredom, anger, or frustration. The simple act of eating more accustoms them to greater amounts of flavor during the course of a day, i.e. raises their flavor set points, and thus their potential for increased caloric intake.

An exaggerated flavor set point to provide satiety causes a serious problem for an overweight person who wishes to diet. Because dieting requires restriction of volume and variety of foods in order to reduce caloric intake, dieters are also faced with a reduction in flavor obtained in their diet. The amount of flavor received on a diet is generally much lower than the amount which provides the dieter with satisfaction, and thus dieters often binge to provide themselves with the level of flavor with which they are satisfied --i.e., they eat enough food to reach their flavor set point.

A further problem for overweight dieters is caused by the experience of dieting itself. Flavor deprivation during dieting, compounded by acclimation to intense and varied levels of flavor during bingeing, can drive the dieter's flavor set point even higher. This is illustrated by the fact that many dieters yearn for foods like pepperoni pizza after several days of cottage cheese and lettuce.

The problem of inability to reach the flavor set point, and consequent bingeing, is especially troublesome for repeat dieters. Each time a person loses weight and regains it, subsequent diets require even further caloric restrictions to achieve weight loss. This means even less food and less flavor than on previous diets, and a greater discrepancy between dietary flavor and the flavor set point.

Still yet a further problem that remains unaddressed, is that a dieter who successfully restricts the volume and variety of foods may, in so doing, restrict intake of necessary nutrients such as vitamins and minerals. Depending on the nature of the dietary restrictions, some nutritional supplement to the diet may be required.

One possible solution to the problem of obtaining adequate flavor while dieting might be to modify the flavor set point. Unfortunately, although a person's flavor set point may be raised merely by eating habits, the set point does not appear to be easily lowered. Applicant has attempted through behavioral techniques and hypnosis to teach overweight subjects to be satisfied with less flavor, but such attempts have been decidedly unsuccessful.

Another possible solution to the problem of obtaining adequate flavor while dieting might be to eat highly spiced food. However, use of spices, which activate the fifth cranial nerve, can induce large increases in fluid consumption. Since beverages are often high in calories attempts to provide adequate flavor while dieting by use of spices may result in weight gain rather than weight loss.

## SUMMARY OF THE INVENTION

As is seen from the foregoing discussion of the background, including applicant's related discoveries, the conventional explanations regarding weight loss, and the dieting strategies based thereon, do not account for the existence of flavor set points and the role of flavor in achieving satiety.

It is therefore an object of the invention to cure the aforementioned disadvantages and to provide a method of dieting which accounts for the dieter's flavor set point.

It is a more specific object to provide a method of dieting wherein the dieter may increase the amount of flavor obtained during the course of a day without increasing the quantity of food consumed or calorie intake associated therewith.

Still a further object is to provide the dieter with additional flavor during the course of the day, beyond that which would normally be provided by the food consumed on the diet, in the form of novel low-calorie dietary flavor compositions.

Still yet another object is to provide a low calorie sprayable fluid composition comprising, in combination, effective amounts of a flavor agent and sweetener equivalent which, when sprayed into the mounts of mammals in effective amounts, causes flavor set point satiety.

Still yet a more specific object is to provide, in the novel composition, a predetermined range of sweetener equivalent to flavor equivalent which provides flavor set point satiety in a shelf stable composition having a low water activity.

An even more specific object is to provide a high solids flavor spray composition which inhibits if not eliminates microbial growth.

Still another object of this invention is to provide the dieter with a canister containing a shelf-stable flavor composition which may be conveniently transported in the dieter's purse or pocket and be efficiently dispensed in controlled quantities.

Still another object of this invention is to provide a low caloric sprayable composition comprising in combination effective amounts of a flavor agent, a sweetener equivalent, and nutrients.

Other objects of the invention will become apparent upon a study of the following specification, drawing, and appended claims.

## BRIEF DESCRIPTION OF THE DRAWINGS

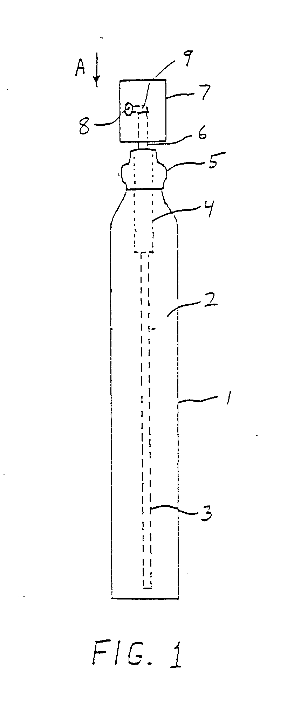

Figure 1 is an elevation of a spray container for fluid compositions, showing in phantom a pump spray mechanism.

## DETAILED DESCRIPTION OF THE PREFERRED EMBODIMENTS

The present invention is directed to novel compositions and uses in the field of dieting and weight loss programs, methods for dieting and controlling weight loss, and articles for dispensing such compositions.

The compositions of the present invention basically include flavor agents and sweeteners which are combined in such amounts to produce a low calorie fluid composition which can cause flavor set point satiety when appropriately administered. As used herein, flavor means taste and odor sensations resulting from the introduction into the mount of a substance which activates taste and olfactory receptors. Flavor agents include substances which, when introduced into the mount, activate taste and olfactory receptors in the manner as is more fully described herein. The term flavor set point as used herein refers to an amount of flavor necessary for an individual to experience satiety, i.e. the amount and variety of taste and odor to feel satisfied with what has been eaten, hence the term flavor set point satiety. As discussed in applicant's discoveries in the background information, it is believed that the hypothalamus is the brain center which mediates hedonic satiety. Thus, as borne out in the Examples hereinafter, oral administration of the novel compositions of the present invention effectively produces flavor set point satiety. It is believed that the individual's sensations of taste and smell are triggered by the application of the flavor composition to taste buds and olfactory receptors which in turn trigger a response in the hypothalamus. In contrast with the activity of spices, which activate primarily the fifth cranial nerve, the flavor compositions of the present invention produce a substantially greater olfactory response, i.e., they activate primarily the first cranial nerve.

In a preferred embodiment, the low calorie flavor compositions include flavor agent, sweetener, water and optionally a specific preservative. The flavors of such compositions are chosen from those flavors which are typically craved by overweight persons having an elevated specific flavor set point, or are suitable for satisfying a craving for flavor by an overweight person having an elevated general flavor set point. Applicant has determined that many overweight people snack or binge on, and have an elevated set point for the flavor of, chocolate, pastry such as apple-cinnamon danish, peanut butter and jelly, or pizza which are thus the preferred flavors for such compositions, although other flavors such vanilla have also been shown to be acceptable.

The flavor agents suitable for use in the present invention act, in combination with the sweetener, to trigger the above responses described in connection with flavor set point satiety. It is contemplated that various flavor agents which are capable of eliciting flavor set point satiety can be utilized and are collectively referenced herein by the term "equivalent(s)". The following specific flavor agents have been successfully utilized by applicant to achieve favorable results (see Examples 3 through 6): those sold by Givaudan under the designations TQM-173 (chocolate), TQ 1961 (apple-cinnamon), F 8061 (peanut butter), F 8572 (natural and artificial grape), F 6230 (bacon) and FD-37870-B (pizza), and agents available from International Flavors and Fragrances (IFF) under the designations Pizza Flavor 556 and 135-38-IOO (cooked tomato flavor). The terms chocolate equivalent, apple-cinnamon equivalent, peanut butter and jelly equivalent, etc., as used herein, shall encompass those flavor agents which in the fluid composition of the present invention provide flavor equivalent to the flavor agents specified herein. Such equivalence may be empirically determined. A flavor equivalent shall also encompass those flavors which include a flavor equivalent to the flavor agents set forth herein, e.g. chocolate equivalent would include chocolate fudge flavors. Depending upon the nature of the flavor agent and other compositional ingredients, the flavor agent(s) may be present in the fluid composition of the present invention in amounts ranging from between about .20 to 50 percent by weight, and more preferably between from about .40 to 25% by weight. It is to be understood that certain flavor agents are more conducive to and may be more readily adapted to be used with larger percentages of sweeteners and therefore the flavor agent would preferably be present in amounts between from about .20 to 10 weight percent, more preferably between from about .20 to 5.0 weight percent, even more preferably between from about 1.0 to 5.0 weight percent, and most preferably between from about 1.0 to 3.0 weight percent. This of course depends upon the type and nature of the sweetener, which in the preferred embodiment is sorbitol.

Sorbitol, a polyhydric alcohol, is a preferred sweetener because it is widely used in dietetic products and its intensity is such that substantial quantities, up to at least about 50 and as high as 90 percent by weight, can be utilized with few calories and without producing such an intensely sweet fluid composition as to be unpalatable or inconsistent with achieving flavor set point satiety. Also, sorbitol tends not to promote dental caries. Moreover, such use of sorbitol yields a high solids fluid composition having a low water activity, which also inhibits, if not prevents proliferation of microrganisms. While applicant's experience to date has been limited to sorbitol, it is believed that other sweeteners could also be suitably used, consistent with the requirements of the present invention. In particular, it is believed that other polyhydric alcohols,

4

such as xylitol or mannitol, or combinatins of polyhydric alcohols, would also yield a suitably high solids fluid composition. The term "sweetener equivalent(s)" shall be understood to designate a sweetener which is present in an amount to render the sweetness of the fluid composition equivalent to that composition containing the specified amount of sorbitol. Other suitable sweeteners may include sodium saccharin, calcium cyclamate, stevioside, rebaudioside, aspartame, glucose, fructose, sucrose, monellin, thaumatin and glycine. Suitable sweetener equivalents would range between from about 5.0 to 90 weight percent, more preferably from between about 20 to 80 weight percent, and most preferably from between about 20 to 60 weight percent.

Another factor in determining suitable compositions for use in the present invention is the ratio of amount of sweetener to amount of flavor agent. Although a weight ratio of sweetener equivalent to flavor agent equivalent of about 15:1 is preferred, applicant's studies indicate that compositions having weight ratios in the range of about from 5:1 to 50:1 or even about from 1.5:1 to 150:1 are suitable for use in the present invention. Although the weight ratio of sweetener equivalent to certain flavor agent equivalents of about 100:1 is preferred (i.e., as in peanut butter and jelly equivalent), applicant's studies indicate that certain compositions having weight ratios in the range of about from 30:1 to 300:1, or even about from 10:1 to 1000:1 are sufficiently palatable to be suitable for use in the method of the present invention. Applicant has determined that the above-mentioned preferred ratios are optimum from a standpoint of palatability because they maximize the number of perlsons who find the composition palatable. Such ratios will, of course, vary with the type of flavor of the composition, and the flavor agent used as a reference. However, for any particular flavor agent, the aforementioned optimum may be empirically determined. Applicant has further deter mined that compositions having weight ratios of sweetener equivalent to flavor agent equivalent different than the optimum will be palatable or desirable for certain persons, according to their particular circumstances, and that compositions having weight ratios in the range of about 1/3 to 3 times the optimum are palatable to such a sufficiently large number of people that they may be considered equivalent to the optimum. Moreover, compositions having weight ratios in the range of from about 1/10 to 1/3, and from about 3 to 10, times the optimum are preferred by a sufficiently large number of people that they are also useful in the present invention.

A further novel aspect of the fluid compositions of the present invention is their shelf stability at ambient temperatures. This attribute is due to the overall composition of the sprayable fluid system and in particular, the interaction of the flavor agent and sweetener equivalents in such system. It is believed the sweetener plays a key role in shelf stability in applicant's flavor compositions. For instance, while use of sugar as a sweetener may tend to encourage microbial growth, applicant has determined that use of sorbitol as a sweetener in fact may inhibit microbial growth. It is believed that this is due to the relatively high concentrations of sorbitol necessary to adequately sweeten most compositions. Such solids concentrations are believed sufficiently high that microbial cell membranes are ruptured due to the osmotic pressure differential created. It is also contemplated that certain flavor agents can have preservative type effect and/or include ingredients which do; e.g. the use of salt in Example 6. Moreover, various types of flavor agents, predominantly involving fruit and vegetable flavors, are generally used in combination with citric acid, ascorbic acid, and the like, which not only act as a preservative, but also contribute to the flavor and retard degradation, as caused, for example, by oxidation. In some instances other preservatives such as sodium benzoate, potassium sorbate, and the like can be added in effective amounts to such fluid compositions. However, use of alcohol as a preservative has been found highly undesirable because of the bitter taste it imparts to a composition.

In a first method of dieting according to the invention, a pattern of food consumption is established which will be effective in maintaining or reducing the dieter's weight. Such a pattern may simply be restriction to a predetermined daily amount of calories to be consumed by an individual and may be based upon such factors as the dieter's actual and desired weights, desired rate of weight loss, amount of activity, etc. Such a pattern may also be a restriction of diet to include or exclude certain specific foods or types of food, or such restriction in combination with caloric restrictions. The dieter then endeavors to consume food in accordance with the established pattern. At least some of the food which the dieter consumes in accordance with the established pattern is modified with respect to its normal or natural condition by addition of flavor agents to augment the flavor of the food. By consuming such augmented-flavor food, the dieter can obtain sufficient flavor to achieve his flavor set point, and experience satiety, while on a restrictive diet. This method, by providing for satiety while on a restrictive diet, alleviates the various discomforts experienced when a person's flavor set point is not reached. Further, it is a more effective method of dieting since a dieter is much more likely to successfully adhere to a restrictive pattern of food consumption if he experiences satiety than if he does not.

In accordance with the first method, food flavor may be augmented in two ways. One way is to amplify

5

the flavor of the food, i.e. add a flavor agent which has the dominant or intrinsic flavor of the food to which it is added, such as addition of cheese flavor to macaroni and cheese. This way is appropriate for those foods of a diet program which have a particularly tasty dominant flavor, and which are sufficiently high in calories that the amount consumed in a weight-loss diet must be closely observed. A second method of augmentation is to add a flavor agent whose flavor is not present or dominant in the food, e.g. bacon flavor to green vegetables. This is appropriate for those foods of a diet program whose intrinsic or dominant flavor is not particularly tasty or strong. Such augmentation may encourage consumption of foods whose nutritional content is desirable but whose flavor is not, and may also help achieve the dieter's general flavor set point. It is contemplated that flavor agents used in augmentation will be in the form of a powder, which may be directly added to the food or first mixed with water and then added to the food, although flavor agents in a liquid form may also be used.

The desirable amount of amplification is determined by several factors. First, because taste and smell, like other senses, tend to have a logarithmic relationship between perceived intensity and actual amounts of stimulus, a fairly substantial amplification factor is required in order for there to be a perceptible difference between amplified food and un-amplified food. As used herein, an amplification factor is the ratio of the amount of flavor agent present in the amplified food to the amount of flavor agent present in the food before amplification. A minimum amplification factor of about 1.5 has been determined to be perceptibly different, and thus of use in the methods of the present invention. An upper limit on amplification factor is generally determined by considerations of the palatability of the amplified food. Palatability depends in part on the sensory characteristics of an individual dieter. Some dieters, either because of inefficient detection tastes and odors such as may occur with age, or because of highly elevated flavor set points, may tolerate or require quite large amounts of amplification for such amplified food to be effective in the method of the present invention. Also, certain foods are generally found to be palatable at large ranges of amplification than other foods. For instance, applicant has found that fruit flavors are found palatable when amplified three times as much as maximum palatable amplification of, for instance, tomato flavors. Applicant has determined that amplification factors should generally be less, and generally need be no greater, than about twenty, and desirably fall within the range of about from 2 to 5.

Overweight persons having an elevated flavor set point for specific flavors, particularly for those flavors which occur primarily in high calorie foods, may not be able to achieve their flavor set point while maintaining a reduced calorie diet or may find it inconvenient to obtain amplified food. For such persons, what is needed is a dieting method which provides them with substantial amounts of additional specific flavor with substantially no calories. Also, for overweight persons who get the urge to snack between meals or to binge in order to reach their flavor set points, what is required is a means of providing additional flavor which may be carried about with the dieter, and available to immediately provide flavor for satisfying a craving that might otherwise lead to snacking or bingeing.

In a second method of dieting according to the invention, a pattern of food consumption is established and the dieter endeavors to consume food in accordance with it, as in the first method. The dieter obtains the additional flavor required to achieve his set point, however, in the form of the novel fluid compositions, containing flavor agent as more fully set forth hereinbefore and in the Examples, which compositions are sprayed into the mouth. According to this method, the dieter may apply such compositions whenever he experiences a desire to eat between meals, or to eat foods or amounts of foods which are not part of his established dietary pattern. The method is particularly preferred when the dieter has an elevated specific flavor set point, and sprays into his mouth a composition having such specific flavor. Also, the method may be carried out by applying such compositions during or shortly before or after a meal, whereby the quantity of food desired at the meal may be reduced.

Consumption of additional flavor to achieve the set point by spraying a fluid composition, such as the novel compositions herein, has several advantages. Only a small volume of such compositions need be sprayed to apply an amount of flavor agent typically effective to achieve the flavor set point. This part is because small volumes of such compositions, when sprayed, effectively cover the tongue to activate the appropriate taste receptors thereon. Also, substantial amounts of flavor agent are entrained in the air when such compositions are sprayed in the mouth, and are effectively carried through the throat and nasal passages to effectively activate olfactory receptors.

Applicant has determined that application of volumes of about .1 ml to .2 ml of the novel compositions of the invention is generally adequate to provide satiety, while in extreme cases volumes of about 1.5 ml may be required.

With such small volumes of fluid required to be sprayed to achieve satiety, the caloric benefit of the second method and use of the novel compositions therein becomes apparent. When such compositions contain sorbitol, which contains calories but is preferred for other reasons, they may contain from about .1 to 3 calories per ml, and more preferably from about .5 to 2 calories per ml. thus, satiety may typically be provided with consumption of about .05 to .4 calories, and even in extreme cases with less than about 4.5 calories. These low caloric contents in amounts of fluid having sufficient flavor agent to produce satiety and having sorbitol as a sweetener indicate that there is little caloric advantage to be obtained by using sweeteners that, in effective amounts, have fewer calories.

The preferred means for dispensing the novel compositions in the second method of the invention is a spray container having a spray mechanism which dispenses controlled, substantially uniform volumes of contained fluids. Such spray mechanisms include pump sprayers, as are known in the art. Especially preferred are dispensing means which uniformly dispense volumes containing about the minimum amount of flavor agent which may provide satiety in some people. Thus, a dieter using the second method will be required to apply at least one, and preferably two or three, sprays to obtain satiety. The dieter may therefore control the number of sprays applied to his mouth in order to just achieve, but not exceed, his flavor set point, and may avoid driving up his flavor set point (and wasting the contents of the container) by spraying excessive amounts. Such over spraying may easily occur with, for instance, pressurized aerosol containers. The preferred spraying means, by applying an intense blast of flavor agent, may thus stimulate the trigeminal nerve on the tongue. Such stimulation leads to increase in adrenalin, and ultimately blood glucose and insulin, which may also aid in achieving satiety. Levels of serotonin, another satiety factor, are also increased by such stimulation.

Figure 1 shows an article according to the present invention. This article comprises a container 1 having disposed therein a fluid composition 2 according to the present invention. Fluid composition 2 is dispensed as a spray through orifice 8 of cap 7 when cap 7 is moved in the direction of the arrow A. This occurs via a spray mechanism comprising a hollow piston 6 moving axially in a pump 4 to which fluid is supplied by tubular member 3. The pumped fluid composition 2 emitted from piston 6 is conveyed to orifice 8 by a duct 9. The pump spray assembly may be secured to the container 1 by a ferrule 5 which is sealingly crimped to the upper end of container 1.

With the preferred compositions of the Examples hereinafter, applicant has determined that a spray mechanism dispensing substantially uniform volumes of about .066 ml satisfies the above criterion. Of course, variations in the concentration of flavor agent equivalent will cause corresponding variations in the preferred uniform volumes of fluid to be dispensed.

Novel compositions, including substantial amounts of flavor agent, may be contained in a relatively small volume container, e.g. 10 ml, which may be easily carried about by a dieter and be available for use in the second method wherever and whenever required.

In another embodiment of the invention, the novel compositions set forth above may further comprise nutritional supplements such as vitamins and/or minerals. Such nutritional supplements may include vitamins A, B1, B2, B6, B12, C, D, E, niacin, pantothenic acid, folic acid, and biotin, and minerals such as calcium, iodine, iron, magnesium, copper, zinc, manganese, chromium, selenium and molybdenum. Such compositions may help provide needed nutrients which a dieter may consume to supplement any deficiency resulting from reduction of food volume consumed while on a restrictive diet. Such compositions may also be nutritionally useful for children. If, instead of consuming a high-calorie, non-nutritional snack, a volume of nutrient-containing fluid composition according to the invention is sprayed into a child's mouth, then the child obtains the flavor for which a snack was desired, as well as the vitamins and minerals which such snack would not have provided, without consumption of unneeded calories. In a most-preferred embodiment of the novel nutrient-containing compositions, the nutrients are present in amounts which correspond to their recommended daily allowances. In this way, the compositions form a balanced dietary supplement. Because of the differences in nutritional requirements of, for instance, children and adults, different compositions may be provided in which the nutrient content is appropriate for an intended user group. Further, the concentration of nutrients in such compositions is desirably sufficiently high that several volumes of this spray will contain a nutritionally-significant amount of such nutrients, while not so high that consumption of the maximum number of sprays which may reasonably be expected to occur would cause consumption of an excessive amount of any of the constituent nutrients.

Applicant has demonstrated the effectiveness of various dieting methods, and compositions and articles useful therein, as set forth in the following examples.

## Example 1

Substantially non-caloric flavor agents were added in various concentrations to the following foods:

| Food | Flavor of agent |
|------|-----------------|
| apple sauce | apple |
| macaroni and cheese | cheese |
| tomato juice | tomato |
| tuna salad | tuna |
| green vegetables | bacon |

The flavor agents used were those sold by International Flavors & Fragrances under the designations RH-35-B-3, -4, -2, and -7 for the apple, tomato, tuna, and bacon flavors, respectively.

Food whose flavor was thus augmented, as well as un-augmented food, was provided to various subjects two hours after their most recent meal. The subjects were permitted to eat all they wanted. The amount of food eaten by the various subjects was measured by its weight or volume. Overweight subjects provided with augmented food ate smaller amounts than did those provided with un-augmented food. Further, there was an inverse relationship between the amount of augmentation of the flavor and the amount of food consumed. That is, the greater the amount of flavor agent added to the food, the smaller the amount of food which was consumed. Although augmentation of flavor produced a decrease in the amount of food eaten, there was no correlative decrease in satisfaction with what had been eaten. Post-test interviews of subjects indicated that they considered the augmented-flavor foods delicious and satisfying.

## Example 2

Groups of overweight subjects were placed on a 1,000 calorie per day diet. One group of 11 subjects consumed food whose flavor was augmented by addition of non-caloric flavors. A second group of 17 subjects consumed food without augmented flavor. A third group of 14 subjects was provided with substantially non-caloric chocolate sprays and vanilla sprays according to the present invention and was instructed to spray their tongues before meals and whenever they had a craving for food. Over a two week period, the members of the group receiving augmented-flavor food lost an average of 4.61 pounds. the members of the group receiving un-augmented food lost an average of 3.47 pounds and the members of the group provided with sprays lost an average of 4.34 pounds.

The results of Example 1 and 2 indicate that the determinative factor in achieving satiety in overweight people was not the volume or calories of food consumed, but rather the amount of flavor received. They further indicate that to achieve weight loss, and still achieve satiety, an overweight person may restrict his caloric intake by consuming sufficient additional non-caloric flavor agent to achieve his flavor set point. In the experiment of Example 2, the significantly greater weight loss for the groups receiving augmented-flavor food or flavor sprays is attributable to the fact that members of the group receiving neither were unable to maintain a 1,000 calorie per day intake; they ate more food to obtain additional flavor in an attempt to accommodate their flavor set point. Thus, an effective means of providing satiety to the dieter while on a low calorie diet is to consume additional flavor in the form of substantially non-caloric flavor agents.

Applicant has formulated compositions of chocolate, apple-cinnamon, peanut butter and jelly, the pizza flavored sprayable fluids while have been found sufficiently flavorful and palatable so as to be effective in applicant's method of dieting including addition of flavor to the diet in the form of a spray. These compositions form the preferred embodiments of this aspect of the present invention, and are set forth below.

8

## Example 3 - Chocolate Composition

| Ingredient | Weight Percentage |
| --- | --- |
| Sorbitol | 45.50 |
| Chocolate Flavor Agent (Givaudan TQM-173) | 3.00 |
| Caramel Coloring | .20 |
| Salt | .05 |
| Citric Acid USP | .05 |
| FD&C Red #40%-10% | .04 |
| Sodium Benzoate USP | .01 |
| Potassium Sorbate | .01 |
| Water | balance |

9

## Example 4 – Apple-Cinnamon Composition

| Ingredient | Weight Percentage |
|---|---|
| Sorbitol | 30.80 |
| Apple-Cinnamon Flavor Agent (Givaudan TQ 1961) | 2.00 |
| Salt | .05 |
| Citric Acid | .05 |
| Sodium Benzoate · | .01 |
| Potassium Sorbate | .01 |
| Water | balance |

## Example 5 – Peanut Butter and Jelly Composition

| Ingredient | Weight Percentage |
|---|---|
| Sorbitol | 45.50 |
| Peanut Butter Flavor Agent (Givaudan F 8061) | .22 |
| Grape Jelly Flavor Agent (Givaudan F8572) | .20 |
| Citric Acid | .15 |
| Sodium Benzoate | .01 |
| Potassium Sorbate | .01 |
| Water | balance |

## Example 6 – Pizza Composition

| Ingredient | | Weight Percentage |
|---|---|---|
| Sorbitol | | 7.80 |
| Pizza Flavor Agent: | | 21.04 |
|    IFF Pizza Flavor 556 @ 5% | 17.50 | |
|    IFF Cooked Tomato Flavor I35-38-IOO | 2.00 | |
|    Givaudan Bacon Flavor F-6230 @ .05% | 1.50 | |
|    Givaudan Powder FD-3787-B | .04 | |
| | 21.04 | |
| Salt | | .33 |
| Water | | balance |

For the compositions of Examples 3-6, a sprayed volume of .006ml will contain less than .2 calories. Applicant's studies indicate that applications of about 2 or 3 such sprays will normally satisfy a craving; in extreme cases, 10 or 20 sprays may be required. Even with application of 20 sprays, however, less than 4 calories will have been consumed. This is substantially less than the caloric content of ordinary foods providing the amount of flavor of such applications of the compositions.

## Example 7 Microbiology of Compositions

Pump spray containers having the chocolate composition of Example 3 or the apple-cinnamon composition of Example 4 were stored for a total of 28 days, at optimum storage temperatures (35°C for bacteria; 20-25°C for mold and yeast). Tests were performed at zero time, after 14 days, and after 28 days. Tests were performed by wiping the pump with 70% isopropyl alcohol to sanitize it; allowing the pump to dry; actuating the pump to dispense spray into a sterile container; and testing the sprayed material for aerobic bacteria, mold, and yeast concentration. Such tests were performed by diluting a sample of this sprayed material; applying the diluted sample to a sterile biological growth medium; and, after a time, counting the number of colonies of aerobic bacteria, mold or yeast which have developed. In such tests, it is assumed that each such colony is derived from a single microorganism in the original sample. Thus, based on the number of colonies observed and the sample volume, the number of microorganisms which were present per unit volume of the sampled material may calculated. Because of uncertainties introduced by sampling, an observation that no microorganism colonies grew places only an upper limit on the concentration of microorganisms in the sampled material. In particular, in the following data, an entry of "<10" indicate that no microorganism colonies grew, and that ten microorganisms per milliliter is the upper limit of concentration. The following microorganism concentrations were determined:

| Composition | Storage Time | Aerobic Bacteria per ml | Mold per ml | Yeast per ml |
|---|---|---|---|---|
| Apple Cinnamon | 0 | <10 | <10 | <10 |
| Apple Cinnamon | 14 days | 20 | 50 | <10 |
| Apple Cinnamon | 28 days | 100 | 110 | <10 |
| Chocolate | 0 | <10 | <10 | <10 |
| Chocolate | 14 days | <10 | <10 | <10 |
| Chocolate | 28 days | <10 | <10 | <10 |

## Example 8 - Preservative Challenge Study

A preservative challenge study was made of the antimicrobial effectiveness of the chocolate composition of Example 3 and the apple-cinnamon composition of Example 4. Test organism cultures were mixed and use by group, as follows:

Group A-EntericaE. coli ATCC 8739
Enterobacter cloacae ATCC 23355
Salmonella typhimurium ATCC 14028

Group B - PseudomonadsPseudomonas aeruginosa ATCC 9027
Pseudomonas capacia

Group C - StaphylococciStaphylococcus aureus ATCC 25923

Group D - Mold-Yeast Aspergillus niger ATCC 16404
Candida albicans ATCC 10231

50 ml volumes of the compositions were placed in 4 oz. sterile jars and inoculated with 0.5ml of inoculum to achieve concentrations of 400,000 to 500,000 per ml for bacteria, and 75,000 to 100,000 per ml for mold. Compositions were tested for aerobic bacteria, mold, and yeast concentration using the method set forth in Example 7. Compositions were tested as received, with 1-2 hours of inoculation, and after 7, 14 and 28 days of storage at optimum temperatures (35°C for bacteria; 20-25°C for mold and yeast). Initial microorganism concentrations were as follows:

| Composition | Condition | Aerobic Bacteria per ml | Mold per ml | Yeast per ml |
|---|---|---|---|---|
| Chocolate | as received | <10 | <10 | <10 |
| Apple Cinnamon | as received | <10 | <10 | <10 |
| Chocolate | inoculated | 465,000 | 85,000 | 11,000 |
| Apple Cinnamon | inoculated | 400,000 | 72,000 | 27,000 |

For both the chocolate composition and the apple-cinnamon composition, after 7, 14 and 28 days of storage of the inoculated compositions, microrganism concentrations were as follows:

| Microorganism in inoculum | Condition of Storage | Aerobic Bacteria per ml | Mold per ml | Yeast per ml |
|---|---|---|---|---|
| Group A | 35°C | <10 | -- | -- |
| Group B | 35°C | <10 | -- | -- |
| Group C | 35°C | <10 | -- | -- |
| Group D | 20-25°C | — | <10 | <10 |

In the above Example, the entry of "—" indicates that the test was not done and not appropriate for the temperature. As in Example 7, an entry of "<10" is the upper limit on microorganism concentration based no growth of colonies.

While the novel methods, compositions, and apparatus set forth herein are useful in the field of dieting and weight control, they may also be useful in other fields, such as in assisting smokers and alcoholics to reduce their consumption of tobacco and alcohol. Weight loss/maintenance can be desirable for medical or non-medical (such as cosmetic or sports) reasons.

Having thus described the preferred embodiments of the present invention. It is apparent that certain modifications and variations can be made without departing from the spirit and scope of the invention.

**Claims**

1. A low calorie sprayable fluid composition useful in dieting programs for mammals comprising effective amounts of a flavor agent equivalent and sweetener equivalent whereby said composition, when effective amounts are sprayed into the mouths of said mammals, causes satiety by achieving their flavor set point.

2. A composition according to claim 1, wherein said flavor agent is within the range of about from .2% to 10% by weight, and said sweetener equivalent is within the range of about from 5% to 90% by weight.

3. A composition according to claim 2, wherein said sweetener equivalent is preferably within the range of about from 20% to 60% by weight.

4. A composition according to claim 2, wherein said sweetener equivalent includes a polyhydric alcohol.

12

5. A composition according to claim 1, wherein the weight ratio of sweetener equivalent to flavor agent equivalent is within the range of about from 1.5:1 to 150:1.

6. A composition according to claim 5, wherein said weight ratio is preferably within the range of about from 5:1 to 50:1.

7. A composition according to claim 6, wherein said weight ratio is more preferably about 15.

8. A composition according to claim 1, wherein said flavor agent has a chocolate flavor.

9. A composition according to claim 1, wherein said flavor agent has an apple-cinnamon flavor.

10. A composition according to claim 1, wherein said flavor agent has a peanut butter and jam flavor.

11. A composition according to claim 1, wherein said flavor agent has a pizza flavor.

12. A composition according to claim 1, further comprising vitamins.

13. In a method of dieting wherein during a prescribed time interval food having a predetermined number of calories effective to produce weight loss is consumed, the improvement comprising consuming during said time interval an amount of low-calorie flavor agent sufficient to achieve, in conjunction with said food, the flavor set point of the dieter for said time interval.

14. A method according to claim 13, wherein said flavor agent is consumed by consuming food containing said flavor agent.

15. A method according claim 13, wherein said flavor agent is consumed by spraying a fluid containing said flavor agent into the mouth of the dieter.

16. A method according to claim 15, wherein discrete, substantially uniform volumes of said fluid are sprayed, whereby the amount of flavor agent consumed may be controlled to achieve, but not exceed, the flavor set point of the dieter.

17. A method according to claim 13, wherein the flavor of said flavor agent is selected from the group consisting of chocolate, apple-cinnamon, peanut butter and jam, and pizza.

18. An article useful in dieting programs consisting of a container including means for dispensing from said container controlled, substantially uniform volumes of contrained fluid as a spray, and contained fluid including a flavor agent selected from the group consisting of chocolate, apple-cinnamon, peanut butter and jam, and pizza.

19. Amplified-flavor food useful in dieting programs comprising the mixture of a food substance, said food substance having a dominant flavor, and substantially non-caloric flavor agent having the flavor of the dominant flavor of said food substance.

A

9

7

8

6

5

4

2

1

3

FIG. 1